Europäisches Patentamt

European Patent Office

Office européen des brevets

(19)

(11) Publication number: **0 329 617**
**A2**

## (12) EUROPEAN PATENT APPLICATION

(21) Application number: **89830028.0**

(22) Date of filing: **27.01.89**

(51) Int. Cl.⁴: **B 29 C 67/14**
B 29 C 43/10, B 29 C 67/18

(30) Priority: **29.01.88 IT 1790988**

(43) Date of publication of application:
**23.08.89 Bulletin 89/34**

(84) Designated Contracting States:
**AT BE CH DE ES FR GB GR LI LU NL SE**

(71) Applicant: **Filipponi, Alberto**
**Via Trebbio 11**
**I-62010 Pollenza (MC) (IT)**

(72) Inventor: **Filipponi, Alberto**
**Via Trebbio 11**
**I-62010 Pollenza (MC) (IT)**

(74) Representative: **Baldi, Claudio**
**Piazza Ghislieri, 3**
**I-60035 Jesi (Ancona) (IT)**

The title of the invention has been amended (Guidelines for Examination in the EPO, A-III, 7.3).

(54) **Method and apparatus for the pneumatic compression moulding of film-covered fibre-reinforced plastic articles.**

(57) This invention relates to an industrial method with relative system for compacting fibre-resin reinforcement layers deposited by hand and formed by contact or by spray contact which is characterized mainly by the use of a thermoformable film which adheres, under vacuum, to the internal sides of a support and forming mold which fits perfectly to the layered article supported inside the tank where the vacuum is created in order to totally remove all the air bubbles possibley present inside the fibre-resin layer which is compacted by means of the above film further to the introduction of air at the same time in the mold and the above tank, so as to achieve a mutual and uniform pressing of the thermoformable film and the fibre-resin layer with a progressively increasing pressure to reach atmospheric pressure in the mold and in the tank.

FIG 1

EP 0 329 617 A2

Bundesdruckerei Berlin

**Description**

## Industrial Method and Relative System for Pneumatic Compacting Fibre-Resin Layers by Means of a Thermoformable Film, formed by Contact or by Spray Contact.

This patent application for an industrial invention relates to an industrial method with relative system for compacting fibre-resin reinforcement layers deposited by hand and formed by contact or by spray contact, which is characterized essentially by the fact that a thermoformable film is used which adheres, under vacuum, to the internal sides of a support and forming mold, which fits perfectly to the layered article supported inside a tank where the vacuum is created in order to totally remove all the air bubbles possibly present inside the fibre-resin layer, which is compacted by means of the above film further to the introduction at the same time of air into the mold and the above tank, so as to press the thermoformable film and the fibre-resin layer together and uniformly with a progressively increasing pressure to reach atmospheric pressure in the mold and in the tank.

To better understand the innovative feature and the advantages of the method according to the invention it is retained useful to mention the current hand layering technology for which the industrial method according to the invention is the main application.

Hand layering, also known as "hand lay-up" is probably the most commonly used technology in the composite sector, particularly suitable for small series productions.

One of the most commonly used techniques is the contact forming technique according to which the material is placed layer by layer without pressure. Each layer is positioned carefully into place and then impregnated with catalyzed and accelerated resin by means of a brush or roller. The resin must be distributed with great care and any air which may be trapped in the same must be removed. The layers obtained in this way are polymerized without pressure and at ambient temperature or in an oven.

Another technique is that of forming by spray contact where the catalyzed resin and the short glass fibres are sprayed at the same time on the mold. The spray unit consists of a gun, generally with a double nozzle (one for resin and the accelerating agent and the other for the resin and the catalyzer), a cutter for cutting the "roving" fibres and a system for spraying the fibres.

The layers obtained in this way must be pressed uniformly so as to make them adhere to the surface of the article, and eliminating any possible air bubbles trapped in the fibre-resin layer, which must be made as smooth and compact as possible.

This operation, commonly known as "compacting" or "rolling" is extremely important since the technical-mechanical characteristics of the fibre-resin reinforcement layer depend essentially on the quality of this last working phase.

"Compacting" has to date been carried out by hand with special tools (rollers or brushes) by trained staff, even if recently both the laying phase and the compacting phase of the fibre-resin layer have been automatized with the use of robots.

The main difference between hand or robot compacting and that obtained using the method according to the invention lies in the fact that simple tools are used (rollers, brushes) to lay the entire surface so that either the operator or the robot, even if working very quickly, are forced to apply many coats, the smaller the tool used, the greater the number of coats required, according to the complexity of the surface of the article.

On the other hand, the method according to the invention, with the help of the thermoformable film (continuous means) which, at the end of the operation covers the entire surface of the reinforced layer of the article, guarantees the total elimination of air and compacting of the entire layer uniformly at the same time, with a considerable saving in labour or robot time.

The film used, which remains permanently attached to the outside surface of the article, gives several advantages first of which is the possibility of handling the finished article more easily without having to use gloves, because the film acts as a screen against the pieces of fibre which are never totally incorporated into the surface layer of the article when hand rolled.

In addition, in the case of stackable articles, the use of film makes it possible to stack these when stored or transported without risking that the touching surfaces become scratched.

The film outside the article makes the latter impermeable to atmospheric agents (humidity, radiation,..) and reduces the influence of these on the mechanical characteristics.

Another useful advantage is that when the layer is polymerized (hardened), the reactive components of the resins do not evaporate thereby reducing pollution in the working environment.

The main object of this method however is to increase production considerably and to eliminate the need for operators or robots during the "rolling" phase which is currently carried out with considerable operating and environmental problems.

In fact application is by hand with specific tools which are in contact with the liquid resin when it hardens.

This means that each time the same is touched after each single application, the operator has to wash his hands and the tools used with acetone. It is common knowledge that this solvent is extremely volatile in air, toxic and inflammable.

In addition fumes are given out by the resins being polymerized in the working environment, thereby creating ecological problems for the workers.

Bearing in mind that the time required for compacting is generally much higher than that required for spraying (considering the geometric complexity of the article), the importance of the invention in the production process is easily understood.

The system for the industrial process according to the invention mainly includes a mold suitable for fitting perfectly to the layers to be compacted, and a tank into which the article (previously covered with the fibre-resin reinforcement layer) is placed on a platform, which translates vertically by means of an underlying hydraulic cylinder; the mold simply overturns and positions itself over the tank like a lid, and provides an airtight seal to the same.

The system in question also includes a pump for creating first the vacuum in the mold so that the compacting film adheres to the same and then the vacuum in the above tank in order to eliminate possible air bubbles trapped in the fibre-resin layer.

Once the tank has been closed with the mold which is covered inside by the compacting film and once the vacuum has been created in the tank itself, the article-holder platform is lifted and the article or more precisely the reinforcement layer of the article is placed against the overlying compacting film, then according to the invention air is introduced at the same time into the tank and into the mold so as to obtain a uniform and simultaneous compacting of all the fibre-resin layer from which air has previously been expelled by the mutual pressing of the film and article which occurs at a progressively increasing pressure until atmospheric pressure is reached inside the tank and mold.

For major clarity the description of the system according to the invention proceeds with reference to the enclosed drawings, which are used descriptively rather than in a limiting sense and are based on an example of the compacting process on a fibre-resin layer deposited on an simply shaped article obtained by thermoforming from a plate, like that of a bathtub; obviously the sytem and operating phases remain unvaried in the case of an article obtained by forming on a previously gelcoated mold.

Fig. 1 is a schematic representation of the bathtub open and the mold, sectioned with a transverse plane with respect to the longitudinal axis of the bathtub which is being considered as an example for the purposes of the compacting process according to the invention.

Fig. 2 is a schematic representation of the tank closed hermetically by the mold, sectioned again with the transverse plane as per fig. 1.

Fig. 3 is a schematic representation of a particular forming of the internal profile of the mold, sectioned transversely so that possible inserts may be applied on the fibre-resin layer.

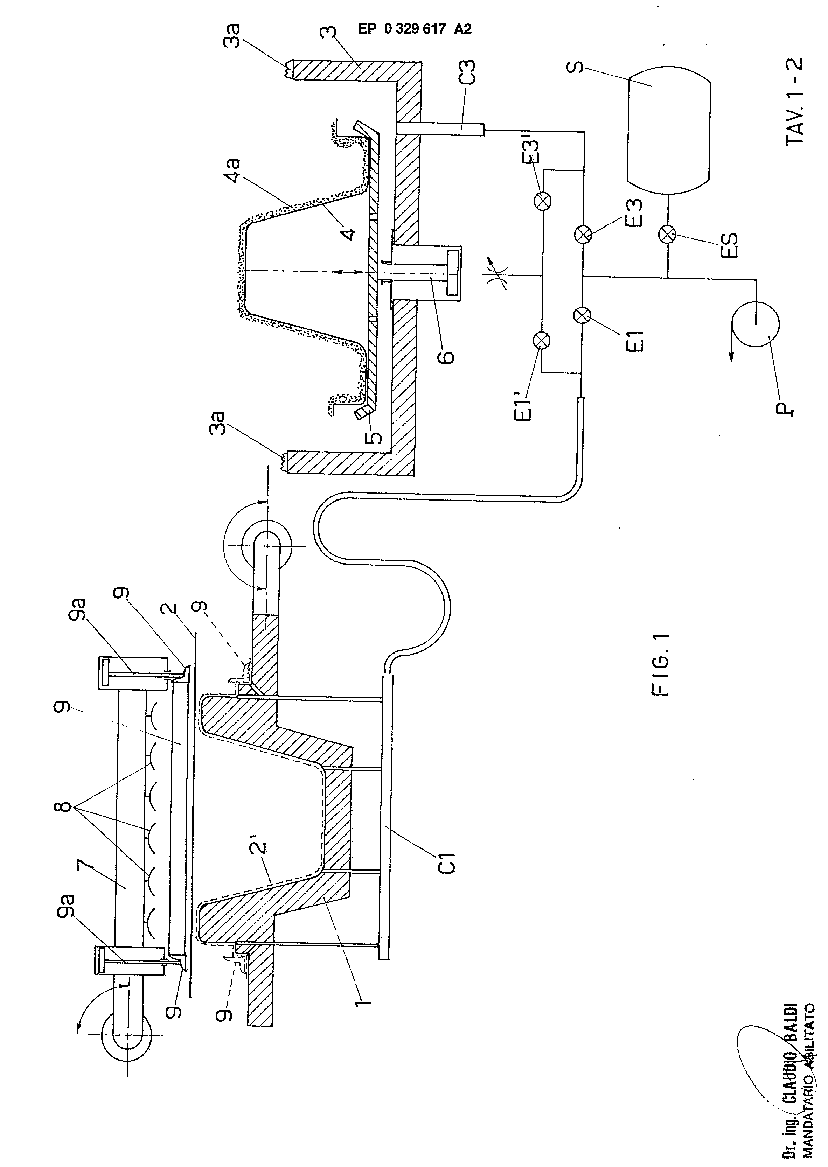

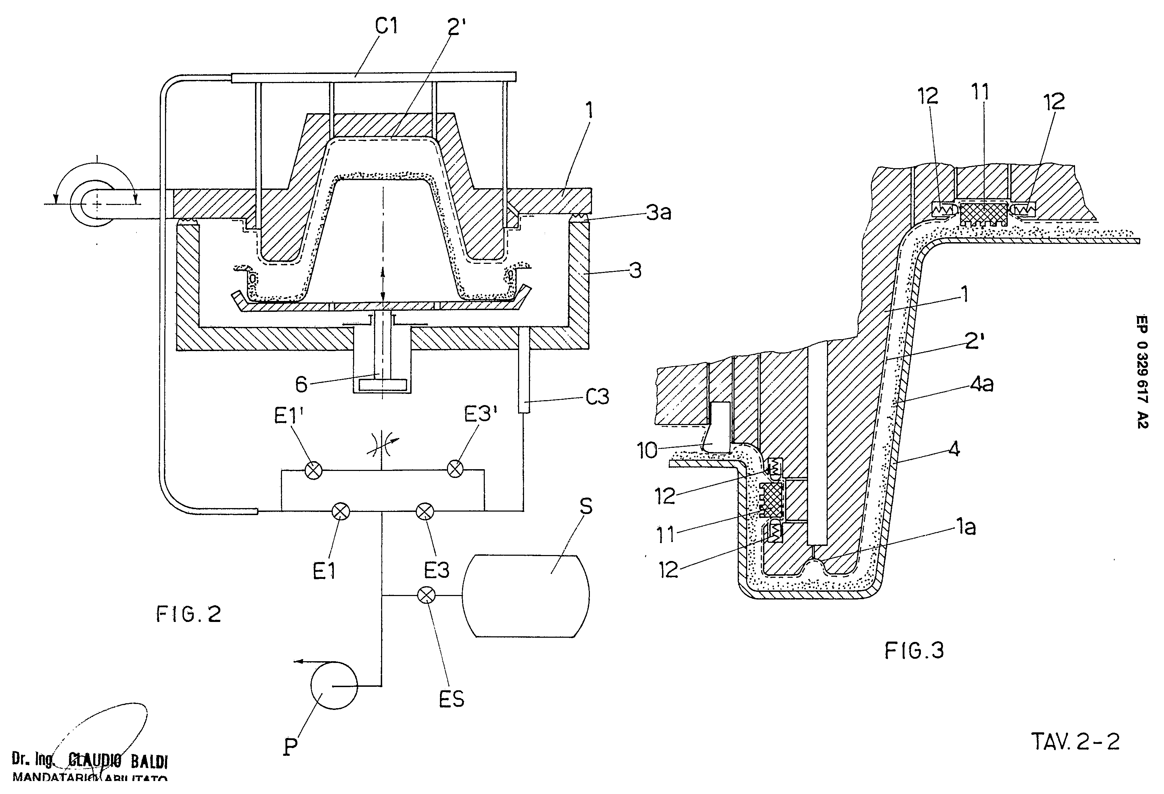

With reference to figure 1 and 2 the system according to the invention includes the following:
- an overturning mold (1), on whose internal walls a thermoformable film (2) is shaped by adherence under vacuum;
- a tank (3) in which the article (4) is fitted with the reinforcement layer (4a) placed on a platform (5) moving vertically by means of an underlying pneumatic cylinder (6);
- a vacuum pump (P) firstly for drawing air from the mold (1) and for drawing air from the tank (3), then after the tank has been closed hermetically by the mold (1), a vacuum storage tank (S) and a set of electrovalves also being fitted;

- overturning equipment (7) fitted with heat radiating panels (8) and a mobile frame (9), operated by pneumatic pistons (9a) suitable for lifting the pre-heated film (2) and taking it into direct contact with the underlying mold (1) and cutting it. The sequence of operating phases necessary for the compacting process according to the invention are now described;

a) the article (4) is positioned on the platform (5);

b) the film (2) is positioned under the equipment (7) and heated by means of radiating panels (8);

c) the heated film (2) is allowed to settle and the perimeter of the same cut above the underlying mold (1) by means of the mobile frame (9);

d) the electrovalve (E1) is opened so that high-vacuum pump (P) draws air from the mold (1) so that in just a few seconds the film (2) is formed by adhering to the internal sides of the mold (1), thereby assuming the shape drawn with a broken line and marked with the number (2′) in the reference figures;

e) the mobile frame (9) is lifted and the equipment (7) overturned in order to free the space above the mold (1);

f) the mold (1) is overturned to 180° and the same is placed over the tank (3) which is closed hermetically by the mold (1) thanks to a sealing gasket fitted along the perimeter (3a) (see fig. 2);

g) the electrovalve (E1) is closed to guarantee the maximum possible vacuum between the film (2′) and the mold (1) and the electrovalves (E3) and (ES) are opened to create a vacuum in the tank (3), a storage tank (S), previously placed under vacuum in non-working time, being fitted to accelerate suction of the air from the tank (3);

h) once the vacuum has been created in the tank (3) the platform (5) is lifted to take the fibre-resin layer (4a) in direct contact with the formed film (2′) which is pressed along the perimeter by a sealing gasket (10) preventing the air, which is subsequently introduced, from filtering between the article and the mold;

i) the electrovalves (E3) and (ES) are closed and the electrovalves (E1′) and (E3′) are opened through which the ambient air, blocked at the inlet, is introduced in the air manifolds (C1) and (C3) of the mold (1) and the tank (3) respectively in order to restore the atmospheric pressure inside the mold (1) and the tank (3);

l) the electrovalves (E′) and (E3′) are closed, once atmospheric pressure has been restored in the mold (1) and in the tank (3) and the platform (5) is lowered;

m) the mold (1) is overturned to 180° so as to allow the article (4) with compacted layer (4a) covered by the formed film (2′) to be removed from one side, and the equipment (7) to be lowered and a new film (2) positioned over the mold (1), on the other side.

In view of the above the reference to the drawings it becomes immediately evident that the process according to the invention can on one hand guarantee a uniform and simultaneous compacting of the entire surface of the fibre-resin layer and on the other hand a complete elimination of any possible air bubbles in the fibre-resin layer.

It is pointed out that the film (2) must be thermoformable film and not cold stretching film since the successful result of the industrial process in question requires the film (2) to adhere to the mold (1), taking on its shape permanently and stably so as to avoid, as would inevitably happen if cold stretching film were used, that the film slide on the fibre-resin layer by its elastic flow action and alter the distribution of the fibre-resin layer deposited on the article.

In order to avoid this problem the mold (1) should be of a geometric shape to ensure that the surface development of the formed film (2') is greater than that of the layer (4a) to be compacted, so as to avoid tangential sliding between layer (4a) and film (2') when the article is fitted in the mold or during the actual "compacting" phase.

This recommendation regarding the value of surface development of the mold may easily be met by making one or more grooves (1a) on the mold (1) as illustrated in fig. 3 so that the formed film (2') as well as the mold itself (1) have an adequate surface development for being positioned on and adhering to the fibre-resin layer (4a) without sliding which would, as previously mentioned, alter the distribution of the soft layer (4a) deposited on the article (4).

This characteristic is of particular importance if points of the fibre-resin layer are undercut because of the presence of inserts in the layer itself in order to stiffen the structure of the article or in order to have anchor plates or bases for fixing accessory components with which the article is to be fitted.

Again with reference to figure 3, it should be noted that in the case of inserts (11) to be placed on the layer (4a), these can be housed inside grooves cut for this purpose on the mold (1) where they are held by a set of two clamps (12) and from which they are expelled by the formed film (2') itself during the compacting phase during which these inserts (11) are pressed and remain fixed stably on the fibre-resin layer (4a), since fixing to the layer (4a) is by means of an intermolecular linkage, should the material of the inserts (11) make this possible, or mechanically with grooves on the inserts (11) in which the fibre-resin material may settle and mold.

From the above it is easy to ascertain that by using the process in question for compacting formed articles it is not necessary to have molds perfectly identical to the surface development of the layer to be compacted, since the surfaces which will cover these are extremely flexible and elastic just as are the surfaces of the film used according to this method, contrary to what has been done to date in the various compacting attempts under vacuum using molds with a rigid shape. The problems of fitting to rigid shapes involve the impossibility of being able to repeat the thickness in depositing the glass-fibre layer (above all if this is done by hand) and in specific sectors, as in the case of article reinforcement which are thermoformed from plates, to repeat the form and size of the articles themselves obtained with similar technologies.

Of particular importance are the construction simplicity and low cost of the system required to realize the process according to the invention which can be fully automatized thereby eliminating the superfluous need, which has to date been indispensable, for specialized workers.

**Claims**

1) An industrial method and relative system for pneumatic compacting fibre-resin layers by means of a thermoformable film, formed by contact or by spray contact, characterized in that the system required for this compacting process includes:
- an overturning mold (1) on whose internal walls a thermoformable film (2) is shaped by adherence under vacuum;
- a tank (3) in which the article (4) is housed, with reinforcement layer (4a), placed on a platform (5), which moves vertically by means of an underlying pneumatic cylinder (6);
- a vacuum pump (P) for drawing air from the mold (1) and for drawing air from the tank (3) then once this has been closed hermetically by the mold (1), a vacuum storage tank (S) and a set of electrovalves also being fitted;
- overturning equipment (7) fitted with heat radiating panels (8) and a mobile frame (9), operated by pneumatic pistons (9a), suitable for lifting the pre-heated film (2) and placing it into direct contact with the underlying mold (1) and cutting it.

2) An industrial method and relative system for pneumatic compacting fibre-resin layers by means of a thermoformable film, formed by contact or by spray contact, characterized in that this compacting process includes the following sequence of operating phases:
    a) the article (4) is positioned on the platform (5),
    b) the film (2) is positioned under the equipment (7) and heated by the radiating panels (8);
    c) the film (2) heated over the underlying mold (1) is cut along the perimeter by the mobile frame;
    d) the electrovalve (E1) is opened so that the high-vacuum pump (P) draws air from the mold (1) so that in just a few seconds the film (2) is shaped by adherence to the internal sides of the mold (1) thereby assuming the shape drawn with the broken line and marked with the number (2') in the reference figures;
    e) ) the mobile frame (9) is lifted and the equipment (7) is overturned so as to free the space above the mold (1);
    f) the mold is overturned to 180° so that the same position over the tank (3) which is closed hermetically by the mold (1) thanks to a sealing gasket fitted along the perimeter (3a) (see fig. 2);

g) the electrovalve (E1) is closed to guarantee the maximum vacuum between the film (2') and the mold (1) and the electrovalves (E3) and (ES) are opened to create the vacuum inside the tank (3), a storage tank (S), previously placed under vacuum in non-working times being fitted in order to accelerate suction of the air from the tank (3);

h) once the vacuum has been created in the tank (3) the platform (5) is lifted to take the fibre-resin layer (4a) in direct contact with the formed film (2') which is pressed along the perimeter by a sealing gasket (10) preventing the air, which is later introduced, from filtering between the article and the mold;

i) the electrovavles (E3) and (ES) are closed and the electrovavles (E1') and (E3') are opened through which the ambient air, blocked at the inlet, is introduced into the air manifolds (C1) and (C3) of the mold (1) and the tank (3) respectively in order to restore the atmospheric pressurein the mold (1) and the tank (3);

l) once the atmospheric pressure has been restored in the mold (1) and in the tank (3) the electrovalves (E1') and (E3') are closed, and the platform (5) is lowered at the same time;

m) the mold is overturned to 180° so as to allow the article (4) with compacted layer (4a) and covered by the formed film (2') to be removed on one hand and the equipment (7) to be lowered and a new film (2) positioned over the mold (1), on the other hand.

FIG. 1

EP 0 329 617 A2

TAV. 1 - 2

FIG. 2

C1  2'  1  3a  3  6  C3
E1'  E3'  E1  E3  S  ES  P

FIG. 3

12  11  12  1  2'  4a  10  4  12  11  12  1a

EP 0 329 617 A2

TAV. 2-2

Dr. Ing. CLAUDIO BALDI
MANDATARIO ABILITATO